# FASCICULE DE BREVET EUROPEEN

(11) **EP 0 533 542 B1**
(45) Date de publication et mention de la délivrance du brevet: **05.01.2000**
(21) Numéro de dépôt: 92402506.7
(22) Date de dépôt: 14.09.1992
(51) Int. Cl.: G06K 7/06, G06K 17/00

(54) **Etui portatif pour une carte à mémoire électronique**
Tragfutteral für elektronische Speicherkarte
Portable case for memory card

(30) Priorité: 20.09.1991 FR 9111650
(43) Date de publication de la demande: 24.03.1993
(73) Titulaire: GEMPLUS ELECTRONICS, F-13705 La Ciotat (FR)
(72) Inventeur: Jannière, Alain, F-75004 Paris (FR)
(74) Mandataire: Kohn, Philippe

(56) Documents cités:
- EP-A- 0 274 288
- EP-A- 0 316 700
- EP-A- 0 333 530
- EP-A- 0 350 509
- EP-A- 0 360 345
- WO-A-88/04458
- DE-A- 3 632 294
- FR-A- 2 636 153

## Description

La présente invention concerne un étui portatif pour une carte à mémoire électronique.

Elle concerne plus particulièrement un étui du type de celui décrit et représenté dans le document FR-A-2.653.249 dans lequel il est prévu des moyens de raccordement entre le circuit intégré de la carte et un circuit électronique d'exploitation par lecture des données contenues dans la mémoire de la carte.

On remarque toutefois que ce document ne décrit que le principe de conception d'un tel étui, sans en donner un mode de réalisation exploitable industriellement et commercialement. On notera à cet égard que la seule fonction de lecture des données mémorisées dans la carte que propose ce document n'est pratiquement d'aucune utilité car elle est assurée le plus généralement, lors de l'utilisation de la carte, par l'appareil récepteur qui informe immédiatement son possesseur de l'état du paramètre principal stocké tel que par exemple le crédit disponible dans le cas d'une télécarte de paiement en usage dans les téléphones publics.

La demande de brevet FR-A-2 636 153 décrit un étui portatif pour une carte à mémoire électronique comprenant les caractéristiques définies dans le préambule de la revendication 1.

L'invention a pour but de proposer un étui portatif dont la conception permet notamment d'assurer l'échange d'informations à distance entre l'étui et une station réceptrice. Une telle fonction trouve notamment à s'appliquer dans le contrôle d'accès de personnes dans un bâtiment, dans un moyen de transport en commun, ou pour le contrôle d'accès d'un véhicule à une voie payante, et ceci sans que l'utilisateur de la carte n'ait à l'introduire directement dans un terminal de lecture de la carte.

L'étui portatif doit également être de dimensions particulièrement réduites et permettre de changer la carte contenue dans l'étui le plus aisément possible et avec une très grande fiabilité d'utilisation qui nécessite notamment d'assurer la fermeture la plus étanche possible de l'étui.

Dans ce but, l'invention propose un étui portatif du type mentionné précédemment, tel que défini dans la revendication 1.

Selon d'autres caractéristiques de l'invention :
- une des petites faces du boîtier comporte une fenêtre à travers laquelle un tiroir qui délimite le compartiment de réception de la carte peut coulisser entre une position sortie dans laquelle la carte peut être mise en place dans le compartiment et une position rentrée dans laquelle la carte est en position d'exploitation à l'intérieur du boîtier ;
- l'étui comporte des moyens de butée agencés entre le boîtier et le tiroir pour limiter la course de sortie de ce dernier et des moyens de verrouillage du tiroir en position rentrée ;
- le commutateur de détection de mise en place de la carte est un organe monté mobile à l'intérieur du boîtier entre une position de repos et une position de détection dans laquelle une branche conductrice de l'organe coopère avec deux pistes formées sur la plaque pour ouvrir ou fermer un circuit de détection, les déplacements de l'organe mobile étant provoqués, à l'encontre d'un effort élastique de rappel vers sa position de repos, par la coopération d'un bord latéral de la carte avec une branche d'entraînement de l'organe ;
- l'effort élastique de rappel est exercé par au moins une branche de l'organe mobile qui prend appui sur une surface correspondante du boîtier ;
- l'extrémité libre du tiroir de carte qui fait saillie hors du boîtier en position sortie comporte une face transversale formant volet qui vient obturer la fenêtre d'introduction lorsque le tiroir est en position rentrée ;
- la face transversale du tiroir formant volet est montée articulée autour d'un axe perpendiculaire à la direction de coulissement du tiroir entre une position d'obturation et une position escamotée pour permettre la mise en place de la carte dans le compartiment en l'introduisant dans ce dernier selon une direction parallèle au plan de la carte ;
- le tiroir est réalisé sous la forme d'un cadre comportant au moins deux montants latéraux reliés entre eux par un montant transversal et des portions de retenue de la carte formées sur les montants latéraux du cadre ;
- l'étui comporte un tiroir auxiliaire agencé parallèlement au tiroir qui reçoit la carte et dans lequel est reçue au moins une pile d'alimentation en énergie électrique du boîtier ;
- les deux tiroirs de carte et de pile sont agencés respectivement de part et d'autre de la plaque et peuvent coulisser hors du boîtier par la même fenêtre ;
- la face transversale du tiroir de la carte formant volet d'obturation constitue une trappe d'accès au tiroir de pile ;
- les composants de l'étui agencés en regard de la face principale de la carte comportent des ouvertures et/ou des fenêtres agencées en vis-à-vis d'une zone déterminée de la carte pour identifier, depuis l'extérieur de l'étui, un pictogramme figurant sur cette zone.

D'autres caractéristiques et avantages de l'invention apparaîtront à la lecture de la description détaillée qui va suivre pour la compréhension de laquelle on se reportera aux dessins annexés dans lesquels :
- La figure 1 est une vue éclatée en perspective qui illustre de manière schématique les différents composants d'un étui portatif réalisé conformément aux enseignements de l'invention ;
- la figure 2 est une vue en perspective de la face interne d'un des deux demi-boîtiers de l'étui ;
- la figure 3 est une vue partielle en section transversale de l'étui ;
- la figure 4 est une vue latérale de la partie avant de l'étui illustrant l'articulation du volet d'obturation ;
- la figure 5 est une vue schématique en coupe partielle par un plan longitudinal médian de la partie avant de l'étui ;
- la figure 6 est une vue partielle en coupe longitudinale par un plan passant par le téton de retenue de l'organe de contact du commutateur de détection ;

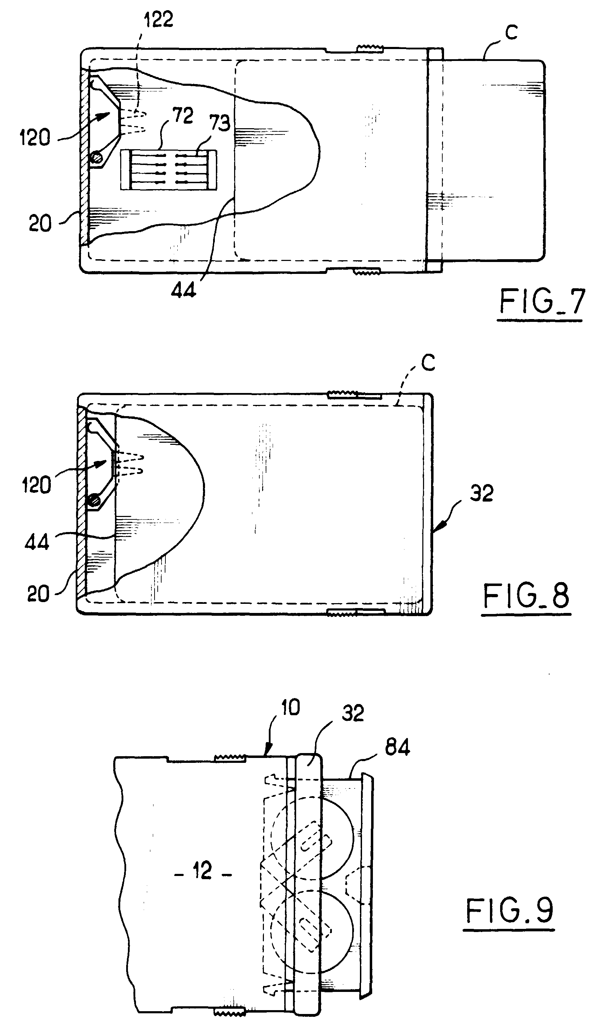

- les figures 7 et 8 sont des vues schématiques illustrant le fonctionnement du commutateur de détection ;
- la figure 9 est une vue partielle de dessus du boîtier illustrant le tiroir de piles en position sortie ;
- la figure 10 est une vue en perspective d'une variante de réalisation de la partie avant de l'étui portatif ;
- la figure 11 est une vue similaire à celle de la figure 5 correspondant à la variante de réalisation de la figure 10 ; et
- la figure 12 est une vue schématique de dessus illustrant une autre variante de réalisation de l'étui portatif.

L'étui portatif illustré sur les figures se compose essentiellement d'un boîtier 10 de forme parallélépipédique rectangle de dimensions sensiblement homothétiques de celle d'une carte à mémoire électronique C conforme à la norme ISO.

Le boîtier 10 est par exemple réalisé en deux demi-boîtiers 12 et 14 dont le plan de joint s'étend sensiblement à mi-hauteur du boîtier.

Le boîtier comporte deux parois principales planes 16 et 18, parallèles aux faces principales de la carte C, et trois faces latérales dont la plus petite, correspondant à la largeur de la carte, délimite un fond 20 qui s'étend dans un plan perpendiculaire à la direction d'introduction I de la carte C.

La petite face latérale opposée au fond 20 est absente afin de délimiter une fenêtre 22 pour l'introduction de la carte dans l'étui.

Le boîtier comporte une plaque à circuit imprimé 24 qui s'étend sensiblement sur toute la surface du boîtier et qui est maintenue en place parallèlement aux faces 16 et 18, entre les deux demi-boîtiers 12 et 14 en étant maintenue latéralement dans un décrochement 27 d'une cloison 90 du demi-boîtier 14.

Conformément à l'aspect de l'invention, la mise en place de la carte C à l'intérieur du boîtier 10 s'effectue par l'intermédiaire d'un tiroir de carte 26.

Le tiroir 26 est réalisé sous la forme d'un cadre constitué de deux montants symétriques 28 et 30 reliés entre eux par une traverse 32.

Les montants 28 et 30 forment des coulisseaux qui sont reçus dans des glissières correspondantes 34 et 36 formées en partie sur la face interne du demi-boîtier 14 afin de permettre un coulissement du tiroir 26 selon une direction parallèle à la direction I d'introduction de la carte.

Les faces internes en vis à vis 38 et 40 des montants ou longerons 28 et 30 comportent des portions planes 42 qui s'étendent parallèlement au plan de coulissement pour délimiter un compartiment dans le tiroir 26 qui reçoit la carte C.

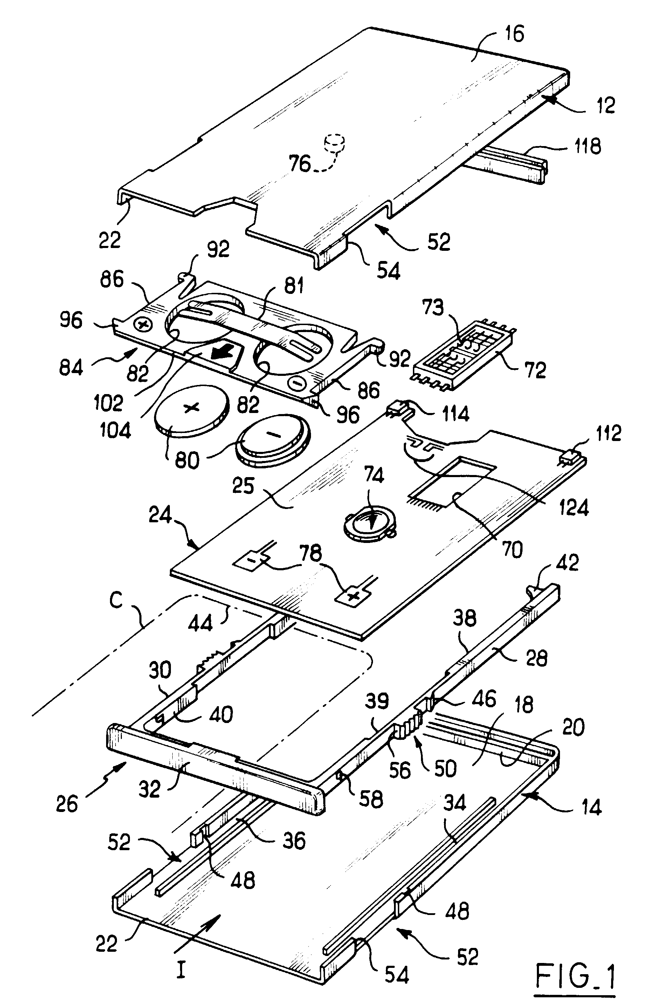

Comme on peut le voir sur la figure 1, le cadre du tiroir 26 ne comporte pas de fond, c'est-à-dire de montant transversal en regard du fond 20 du boîtier, et ceci afin de permettre la coopération du bord libre avant 44 de la carte C avec un organe d'un commutateur de détection de présence d'une carte comme cela sera expliqué plus avant.

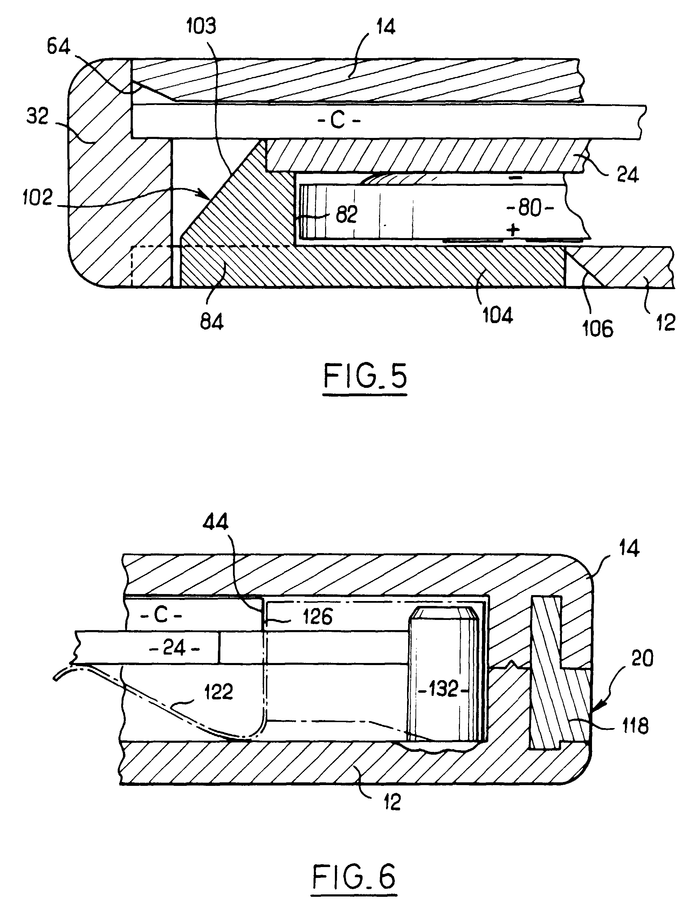

La traverse 32 est reliée aux extrémités libres des montants 28 et 30 qui peuvent sortir du boîtier 10 par la fenêtre 22 et elle constitue la face latérale d'obturation étanche de cette fenêtre 22 lorsque le tiroir est dans sa position rentrée dans le boîtier 10 (voir figure 5).

Le verrouillage en position rentrée du tiroir 26 est assuré par des ergots 46 formés sur les faces latérales externes des montants longitudinaux 28 et 30 qui sont reçus dans des encoches correspondantes 48 formées dans les deux faces latérales longitudinales du boîtier 10.

Le déverrouillage, pour permettre d'amener le tiroir 26 en position sortie, s'effectue grâce à des parties en relief formant boutons 50 accessibles à travers des encoches 52 depuis l'extérieur de boîtier et sur lesquelles l'utilisateur peut agir depuis l'extérieur pour déformer légèrement les montants 28 et 30 vers l'intérieur et dégager ainsi les ergots 46 des encoches 48.

Cette déformation élastique des montants 38 et 40 est rendue possible par l'évidement 39 de la partie correspondante des montants dont il résulte une portion amincie déformable élastiquement.

La longueur des encoches 52, selon la direction I, détermine la course de coulissement du tiroir 26 vers sa position sortie par la coopération du bord avant 56 du bouton 50 avec le bord vertical avant 54 de l'encoche correspondante 52.

La position sortie du tiroir 26 est telle qu'il est situé seulement partiellement hors du boîtier 10 dans cette position.

Pour faciliter l'introduction de la carte C dans le logement délimité par les montants latéraux 28 et 30, sans avoir à déformer la carte, la face transversale avant 32 du tiroir est montée articulée autour d'un axe de pivotement 58 perpendiculaire à la direction de coulissement I.

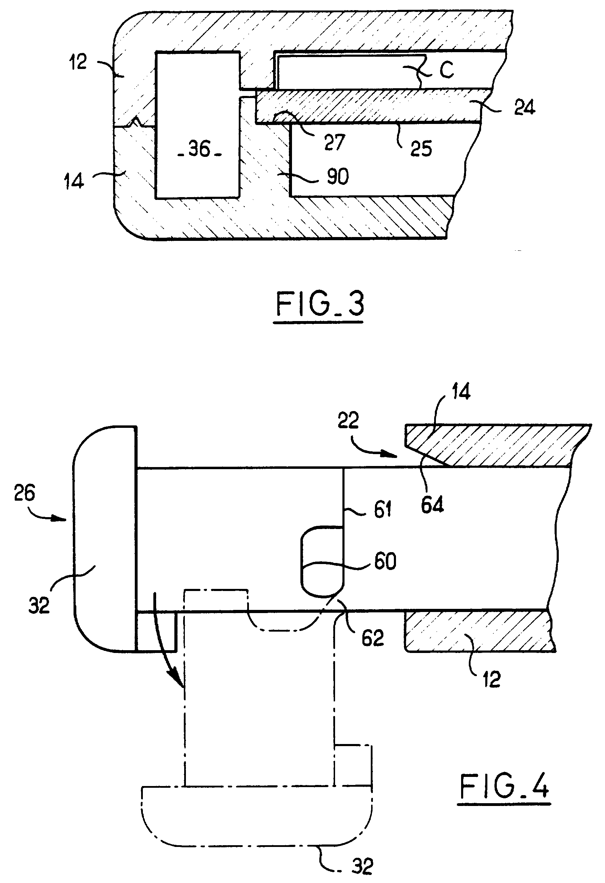

Selon le mode de réalisation schématisé aux figures 1 et 4, le cadre est par exemple réalisé par moulage en une seule pièce et un évidement 60 ainsi qu'une fente 61 délimitent une portion amincie 62 pour constituer une charnière d'articulation du volet 32 autour de l'axe 58.

La face avant ou volet 32 peut ainsi pivoter entre sa position d'obturation dans laquelle elle s'étend dans un plan perpendiculaire à la direction de coulissement I et une position escamotée, (représentée en trait mixte à la figure 4) 32' dans laquelle elle est parallèle au plan du tiroir 26 et dégage ainsi la fenêtre 22 pour permettre d'introduire la carte dans le compartiment du tiroir, en position sortie de ce dernier, en l'introduisant selon une direction parallèle au plan de la carte sans avoir à la déformer. Cette opération est facilitée par un chanfrein 64 formé sur le bord libre avant de la face 18 du demi-boîtier 14.

La plaque 24 comporte notamment un circuit électronique et ses composants (non représentés) pour l'exploitation des données contenues dans la carte C.

La plaque comporte un évidement 70 pour le montage d'un connecteur 72 dont les éléments de contact 73 sont prévus pour coopérer avec les pistes ou places conductrices de la face principale correspondante de la carte C.

La face conductrice 25 de la plaque de circuit imprimé 24 comporte également un élément de contact électrique de commande 74 qui peut être actionné depuis l'extérieur de l'étui 10 en déformant élastiquement la face 16 du boîtier en vis-à-vis qui comporte un ergot 76.

La face 25 de la plaque 24 comporte également des pôles conducteurs 78 pour le raccordement de piles 80 contenues dans le boîtier.

Afin de permettre leur remplacement, les piles 80 sont montées dans deux réceptacles 82 formés dans un tiroir de piles 84.

Le tiroir de piles 84 est monté coulissant dans le boîtier 10 dont il peut sortir par la fenêtre 22.

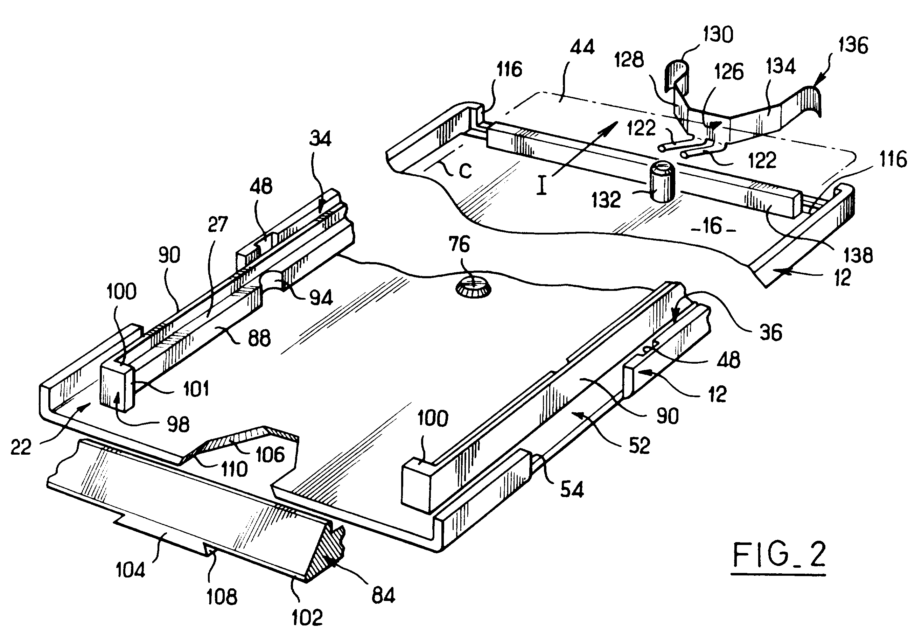

A cet effet le tiroir 84 comporte deux bords longitudinaux 86 qui coulissent entre les faces internes en vis-à-vis 88 des cloisons 90 qui délimitent intérieurement les glissières 34 et 36 (voir figure 2).

Les bords 86 comportent à l'arrière des pattes 92 de verrouillage du tiroir de piles en position rentrée qui sont reçues dans des encoches 94 réalisées dans les faces 88 des cloisons 90.

Les bords 86 comportent à l'avant des ergots 96 qui coopèrent avec les extrémités avant 98 des cloisons 90 pour définir la position rentrée du tiroir de piles.

La position sortie du tiroir 84 est définie par la coopération des extrémités libres des pattes 92 avec les portions transversales 100 des extrémités 98 des cloisons 90.

Le guidage en coulissement du tiroir de piles 84 s'effectue ainsi de chaque côté en deux points de contact constitués par les extrémités des pattes 92 qui coopèrent avec les faces 88 et les bords 86 qui sont guidés entre les faces en vis-à-vis 101 des portions transversales 100 des extrémités 98 des cloisons 90.

En position rentrée, le bord avant 102 du tiroir 84 est masqué par le volet 32 du tiroir de carte 26 et il est donc nécessaire d'ouvrir ce dernier avant de pouvoir sortir le tiroir de piles 84.

Le bord avant 102 du tiroir de piles comporte également un chanfrein 103 qui, en coopération avec le chanfrein 64, impose à la carte C son trajet de mise en place dans le compartiment du tiroir.

Pour faciliter l'extraction des piles, une face du tiroir comporte une partie en relief 104 qui est accessible par une encoche de profil complémentaire 106 formée dans la face avant 16 du demi-boîtier 12.

La partie 104 et l'encoche 106 peuvent également présenter des profils en queue d'aronde 108 - 110 pour s'opposer à l'effort appliqué aux deux demi-boîtiers par la lame conductrice 81 qui relie les piles et qui, en position rentrée du tiroir de piles, prend appui sur la face interne du demi-boîtier 12 en sollicitant ce dernier en éloignement du demi-boîtier 14.

La plaque 24 comporte également des moyens d'émission et de réception de signaux.

Ces moyens peuvent être radioélectriques et comporter dans ce cas une antenne formée directement sur la face 25 de la plaque 24.

Les moyens de transmission peuvent également être réalisés sous la forme de moyens infrarouges et ils comportent alors un émetteur infrarouge 112 et un récepteur infrarouge 114 qui sont agencés sur la plaque 24 pour être situés en regard d'ouvertures 116 formées dans le fond 20 qui est complété par un élément de fermeture 118 transparent aux infrarouges.

Le boîtier 10 comporte enfin un commutateur pour la détection de la présence d'une carte C en position d'exploitation dans le boîtier.

Ce commutateur est réalisé sous la forme d'un organe 120 en matériau conducteur.

Il comporte deux branches de contact 122 qui peuvent coopérer avec deux pistes 124 formées sur la face 25 de la plaque 24 pour établir ou interrompre un circuit de détection.

Les branches 122 sont sensiblement parallèles au plan de la carte et sont reliées à une branche de commande ou d'entraînement 126 avec laquelle coopère le bord avant 44 de la carte C pour provoquer le déplacement des branches 122.

La branche de commande 126 se prolonge vers le fond du boîtier par une branche d'accrochage 128 dont l'extrémité 130 est repliée en boucle pour être reçue avec jeu autour d'un téton de maintien 132 formé sur la face interne du demi-boîtier 12.

La branche de commande 126 se prolonge par une branche de rappel 134 symétrique de la branche 128 et dont la partie convexe de l'extrémité 136 prend appui contre la face 138 du fond 20 du boîtier.

Les deux branches 128 et 134 sont déformables élastiquement de manière d'une part à rappeler élastiquement la branche de commande 126 vers une position de repos, en l'absence de carte, et pour d'autre part constituer un ressort de rattrapage des jeux qui sollicite la carte C en appui contre une surface en vis-à-vis de la face avant 32 du tiroir 26 et qui sollicite ainsi indirectement les bords 56 des boutons 50 contre les bords 54 des encoches 52.

L'organe 120 fait ainsi également fonction de ressort anti-bruit pour les composants mobiles de l'étui.

Du fait de l'accrochage de l'organe 120 sur le téton 132, les branches de contact se déplacent par rapport à la plaque 24 selon une direction légèrement inclinée par rapport à la direction I.

Lorsque l'on désire procéder au remplacement de la carte C, la carte à remplacer est entraînée en position sortie par les portions 42 qui coopèrent avec le bord avant 44, lors du mouvement de sortie du tiroir 26.

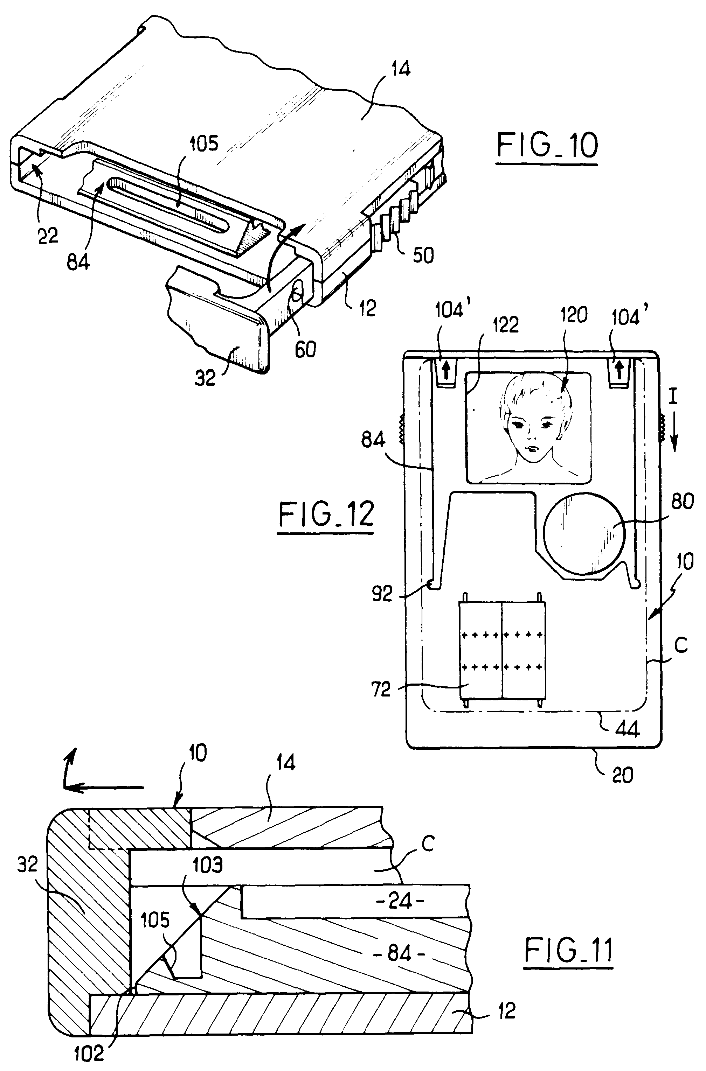

On décrira maintenant la variante de réalisation illustrée aux figures 10 et 11.

Comme on peut le voir en comparaison avec les figures 1 et 5, le sens de pivotement de la face 32 est inverse de celui du mode de réalisation précédent, de manière que la face 32 vienne au-dessus, en considérant les figures 10 et 11, du demi-boîtier 14.

Le tiroir de piles 84 est ici entièrement masqué à l'intérieur du boîtier 10 lorsque le tiroir de carte est fermé, et son bord avant comporte, dans le chanfrein d'introduction 103, un logement 105 permettant de le tirer en position sortie.

La variante de réalisation schématisée à la figure 12 concerne une application d'un étui portatif selon l'invention qui peut être utilisé comme badge d'identification d'une personne.

En effet, il est prévu de réaliser des cartes dont la face qui comporte les plages de raccordement comporte également, dans une zone déterminée de cette face, un pictogramme d'identification tel que par exemple la photo de la personne titulaire de la carte.

A l'aide de cette carte la personne pourra par exemple avoir accès à certaines zones à accès réservé dont l'ouverture sera provoquée automatiquement par les moyens d'émission et de réception de l'étui qui peut être accroché à un vêtement de l'utilisateur pour constituer un badge d'identification personnel de l'utilisateur.

Il est donc nécessaire, pour cette application, de prévoir des moyens permettant de visualiser le pictogramme ou la photo depuis l'extérieur de l'étui.

A cet effet, le demi-boîtier 12 doit comporter une partie transparente en regard de la zone 120 de la carte. Le tiroir de piles 84 doit comporter une fenêtre 122 en regard de la zone 120 et la plaque de circuit imprimé 24 doit bien entendu comporter également une fenêtre ou une ouverture en vis-à-vis.

Afin de pouvoir réaliser la fenêtre 122 dans le tiroir de piles 84, on constate sur la figure 12 que le tiroir présente une longueur selon la direction I supérieure à celle qu'il possède dans le mode de réalisation précédent, la pile 80 étant ici unique et étant agencée à la partie arrière du tiroir 84.

De même, la partie centrale unique en relief 104 peut être divisée en deux zones 104' agencées de part et d'autre de la fenêtre 122.

Au cas où la carte à circuit imprimé comporterait un pictogramme sur la face opposée à celle de sa face principale sur laquelle sont prévues les pistes de raccordement, il serait bien entendu suffisant de prévoir une seule fenêtre dans le demi-boîtier correspondant en vis-à-vis de la zone que l'on désire voir à travers le boîtier depuis l'extérieur.

Au sens de l'invention, le terme "dispositif d'émission et de réception" n'est pas limité à des moyens de transmission par ondes lumineuses ou radio, mais recouvre également des moyens d'échange de données avec un utilisateur constitués par exemple par un clavier d'entrée de données et par un écran d'affichage de données lisibles par l'utilisateur.

De tels moyens d'échange de données permettent notamment la mise en oeuvre de l'invention pour des opérations de paiement à l'aide d'une carte monétaire de paiement.

## Revendications

1. Étui portatif pour une carte (C) à mémoire électronique comportant sur une de ses faces principales des plages de contact électrique reliées à un circuit intégré contenant la mémoire de la carte (C), comportant un boîtier (10, 12, 14) qui possède une forme générale parallélépipédique rectangle sensiblement homologue de celle de la carte (C) dont une des petites faces délimitent une fenêtre (22) permettant l'introduction de la carte (C), comportant des moyens de raccordement pour relier des plages de contact à un circuit électronique d'exploitation assurant au moins une fonction de lecture des données contenues dans la carte (C), comportant une plaque à circuit imprimé (24), disposée dans le boîtier (10), qui porte un circuit électronique et ses composants pour l'exploitation des données contenues dans la carte (C), et comportant un dispositif d'échange de données, notamment d'émission et de réception (112, 114) de données vers et depuis une station de traitement d'informations qui comporte un émetteur (112) et un récepteur (114), caractérisé
en ce que ladite plaque à circuit imprimé (24) est disposée au regard de ladite face principale de la carte (C), et qui comporte des moyens (70) pour le montage d'un connecteur électrique (72), appartenant aux moyens de raccordement, dont les éléments de contact électrique (73) coopèrent avec lesdites plages de contact de la carte (C) lorsque la carte (C) est en position d'exploitation des données,
en ce qu'une face conductrice (25) de la plaque à circuit imprimé (24) comporte des pôles conducteurs (78) pour le raccordement de piles contenues dans le boîtier pour l'alimentation en énergie électrique du boîtier (10), et comporte un élément de contact électrique de commande (74) qui peut être actionné depuis l'extérieur de l'étui (10), par exemple pour déclencher l'émission d'un signal, et dont l'actionnement est obtenu par déformation élastique d'une des faces (16) du boîtier (10),
en ce que l'émetteur (112) et le récepteur (114) sont agencés sur la plaque à circuit imprimé (24),
et en ce que le boîtier comporte un commutateur (120) de détection de la mise en place de la carte (C) en position d'exploitation dans le boîtier (10).

2. Étui selon la revendication 1, caractérisé en ce que le commutateur de détection de présence de la carte (C) est un organe (120) monté mobile à l'intérieur du boîtier (10) entre une position de repos et une position de détection dans laquelle une branche conductrice (122) de l'organe (120) coopère avec deux pistes (124) formées sur la plaque à circuit imprimé (24, 25) pour ouvrir ou fermer un circuit de détection, les déplacements de l'organe mobile étant provoqués à l'encontre d'un effort élastique de rappel vers sa position de repos, par la coopération d'un bord latéral (44) de la carte (C) avec une branche (126) d'entraînement de l'organe (120).

3. Étui selon la revendication 2. caractérisé en ce que l'effort élastique de rappel est exercé par au moins une branche (128, 134) de l'organe mobile qui prend appui sur une surface correspondante (138) du boîtier.

4. Étui portatif selon l'une quelconque des revendications précédentes, caractérisé en ce que ladite petite face du boîtier délimite une fenêtre (22) à travers laquelle un tiroir (26), qui délimite le compartiment de réception de la carte (C), peut coulisser entre une position sortie dans laquelle la carte (C) peut être mise en place dans le compartiment et une position rentrée dans laquelle la carte (C) est en position d'exploitation.

5. Étui selon la revendication 4, caractérisé en ce qu'il comporte des moyens de butée (50, 56) agencés entre le boîtier (10) et le tiroir (26) pour limiter la course de sortie de ce dernier et des moyens (46, 48) de verrouillage du tiroir en position rentrée.

6. Étui selon l'une des revendications 4 ou 5, caractérisé en ce que l'extrémité libre du tiroir (26) qui fait saillie hors du boîtier en position sortie comporte une face transversale (32) formant volet qui vient obturer la fenêtre (22) lorsque le tiroir est en position rentrée.

7. Étui selon la revendication 6, caractérisé en ce que ladite face transversale du tiroir formant volet est montée articulée autour d'un axe (58, 62) perpendiculaire à la direction (I) de coulissement du tiroir entre une position d'obturation et une position escamotée (32') pour permettre la mise en place de la carte (C) dans le compartiment en introduisant dans ce dernier selon une direction parallèle au plan de la carte (C).

8. Étui selon l'une quelconque des revendications 4 à 7, caractérisé en ce que le tiroir (26) est réalisé sous la forme d'un cadre comportant au moins deux montants latéraux (28, 30) reliés entre eux par un montant transversal (32) et des portions de retenue (42) de la carte (C) formées sur les montants latéraux.

9. Étui selon l'une quelconque des revendications 4 à 8, caractérisé en ce qu'il comporte un tiroir auxiliaire (84) agencé parallèlement au tiroir (26) qui reçoit la carte (C) et dans lequel est reçue au moins une pile (82) d'alimentation en énergie électrique du boîtier (10).

10. Étui selon la revendication 9, caractérisé en ce que les deux tiroirs (26, 84) sont agencés respectivement de part et d'autre de la plaque à circuit imprimé (24) et peuvent coulisser hors du boîtier par la même fenêtre (22).

11. Étui selon la revendication 10 prise en combinaison avec l'une des revendications 6 ou 7, caractérisé en ce que la face transversale (32) du tiroir (26) de la carte (C) formant volet constitue une trappe d'accès au tiroir de pile (84).

12. Étui selon l'une quelconque des revendications précédentes, caractérisé en ce que les composants de l'étui agencés en regard de la face principale de la carte (C) comportent des ouvertures et/ou des fenêtres (122) agencées en vis-à-vis d'une zone déterminée (120) de la carte (C) pour identifier, depuis l'extérieur de l'étui, un pictogramme figurant sur cette zone.

## Patentansprüche

1. Tragbares Etui für eine elektronische Speicherkarte (C), mit auf einer seiner Hauptseiten angeordneten elektrischen Kontaktbereichen, die mit einem integrierten, den Speicher der Karte (C) aufweisenden Schaltkreis verbunden sind, mit einem Gehäuse (10, 12, 14), das eine im allgemeinen etwa rechteckige der Karte (C) entsprechende Quaderform aufweist, wovon eine der Schmalseiten ein Fenster (22) zur Einführung der Karte (C) abgrenzt, mit Anschlussmitteln, um die Kontaktbereiche an einen elektronischen Nutzungsschaltkreis anzuschliessen, der zumindest eine Lesefunktion der in der Karte (C) enthaltenen Daten gewährleistet, mit einer im Gehäuse (10) angeordneten gedruckten Schaltungsplatte (24), die einen elektronischen Schaltkreis und seine Komponenten für die Nutzung der auf der Karte (C) enthaltenen Daten umfasst, und mit einer Datenaustausch-, insbesondere einer Sende- und Empfangsvorrichtung (112, 114) der Daten zu und ab einer Informationsverarbeitungsstation mit einem Sender (112) und einem Empfänger (114), dadurch gekennzeichnet,
dass die besagte gedruckte Schaltungsplatte (24) gegenüber der besagten Hauptseite der Karte (C) angeordnet ist und Mittel (70) zur Montage eines elektrischen Steckverbinders (72) aufweist, die zu den Anschlussmitteln gehören, deren elektrische Kontaktelemente (73) mit den besagten Kontaktbereichen der Karte (C) zusammenwirken, wenn sich die Karte (C) in Datennutzungsposition befindet,
dass eine Leitfläche (25) der gedruckten Schaltungsplatte (24) Leitpole (78) zum Anschluss von im Gehäuse enthaltenen Batterien für die elektrische Energieversorgung des Gehäuses (10) umfasst, sowie ein elektrisches Steuerkontaktelement (74), das von aussen des Etuis (10) her betätigt werden kann, beispielsweise um das Senden eines Signals auszulösen, und dessen Betätigung durch elastische Verformung einer der Seiten (16) des Gehäuses (10) erfolgt,
dass der Sender (112) und der Empfänger (114) auf der gedruckten Schaltungsplatte (24) angeordnet sind,
und dass das Gehäuse einen Schalter (120) zur Detektion des Einsetzens der Karte (C) in Nutzungsposition im Gehäuse (10) umfasst.

2. Etui nach Anspruch 1, dadurch gekennzeichnet, dass der Detektionsschalter der Präsenz der Karte (C) ein Organ (120) ist, das innerhalb des Gehäuses (10) mobil zwischen einer Ruheposition und einer Detektionsposition montiert ist, in der ein leitender Zweig (122) des Organs (120) mit zwei auf der gedruckten Schaltungsplatte (24, 25) gebildeten Pisten (124) zusammenwirkt, um einen Detektionskreis zu öffnen oder zu schliessen, wobei die Versetzungen des mobilen Organes gegen eine Rückstellfederkraft in seine Ruheposition verursacht werden, durch das Zusammenwirken einer Seitenkante (44) der Karte (C) mit einem Mitnahmezweig (126) des Organs (120).

3. Etui nach Anspruch 2, dadurch gekennzeichnet, dass die Rückstellfederkraft von mindestens einem Zweig (128, 134) des mobilen Organes ausgeübt wird, der sich auf eine entsprechende Fläche (138) des Gehäuses abstützt.

4. Tragbares Etui nach einem der vorstehend genannten Ansprüche, dadurch gekennzeichnet, dass die besagte Schmalseite des Gehäuses ein Fenster (22) abgrenzt, durch das ein Einschub (26), der das Aufnahmeabteil der Karte (C) abgrenzt, zwischen einer ausgezogenen Position, in der die Karte (C) in das Abteil eingesetzt werden kann, und einer eingeschobenen Position, in der sich die Karte (C) in Nutzungsposition befindet, gleiten kann.

5. Etui nach Anspruch 4, dadurch gekennzeichnet, dass es Anschlagmittel (50, 56) umfasst, die zwischen dem Gehäuse (10) und dem Einschub (26) vorgesehen sind, um den Ausziehweg des letzteren zu begrenzen, und Verriegelungsmittel (46, 48) des Einschubs in eingeschobener Position.

6. Etui nach einem der Ansprüche 4 oder 5, dadurch gekennzeichnet, dass das freie Ende des Einschubs (26), das in eingeschobener Position aus dem Gehäuse herausragt, eine Querseite (32) umfasst, die eine Klappe bildet, um das Fenster (22) zu verschliessen, wenn sich der Einschub in eingeschobener Position befindet.

7. Etui nach Anspruch 6, dadurch gekennzeichnet, dass die besagte, eine Klappe bildende Querseite des Einschubs um eine Achse (58, 62) herum montiert ist, die lotrecht zur Gleitrichtung (I) des Einschubs zwischen einer Verschlussposition und einer eingezogenen Position (32') verläuft, um das Einsetzen der Karte (C) in das Abteil zu ermöglichen, indem sie in dieses nach einer parallel zur Fläche der Karte (C) verlaufenden Richtung eingeführt wird.

8. Etui nach einem der Ansprüche 4 bis 7, dadurch gekennzeichnet, dass der Einschub (26) in Form eines Rahmens hergestellt ist, der mindestens zwei seitliche Pfosten (28, 30) umfasst, die durch einen Querpfosten (32) miteinander verbunden sind, und Rückhaltabschnitte (42) der Karte (C), die an den seitlichen Pfosten ausgebildet sind.

9. Etui nach einem der Ansprüche 4 bis 8, dadurch gekennzeichnet, dass es einen Hilfseinschub (84) umfasst, der parallel zum die Karte (C) aufnehmenden Einschub (26) angeordnet ist, und der mindestens eine Batterie (82) zur elektrischen Energieversorgung des Gehäuses (10) aufnimmt.

10. Etui nach Anspruch 9, dadurch gekennzeichnet, dass die beiden Einschübe (26, 84) jeweils auf einer Seite der gedruckten Schaltungsplatte (24) vorgesehen sind und durch das gleiche Fenster (22) aus dem Gehäuse gleiten können.

11. Etui nach Anspruch 10 in Verbindung mit einem der Ansprüche 6 oder 7, dadurch gekennzeichnet, dass die eine Klappe bildende Querseite (32) des Einschubs (26) der Karte (C) eine Zugriffsklappe auf den Batterieeinschub (84) bildet.

12. Etui nach einem der vorstehend genannten Ansprüche, dadurch gekennzeichnet, dass die gegenüber der Hauptseite der Karte (C) vorgesehenen Komponenten des Etuis Öffnungen und/oder Fenster (122) umfassen, die gegenüber einer bestimmten Zone (120) der Karte (C) angeordnet sind, um von ausserhalb des Etuis aus ein auf dieser Zone angebrachtes Piktogramm zu identifizieren.

## Claims

1. A portable case for an electronic memory card (C) including, on one of its main faces, electric contact pads connected to an integrated circuit containing the memory of the card (C), including a housing (10, 12, 14) which has a rectangular parallelepiped shape substantially similar to that of the card (C), and one of the small faces of which delimits a window (22) making it possible to introduce the card (C), including connecting means for connecting the contact pads with an operational electronic circuit providing at least one read function for reading the data contained in the card (C), including a printed circuit plate (24) located in the housing (10) supporting an electronic circuit and its components for utilising the data contained in the card (C), and including a data exchange device, i.e. a data sending and receiving (112, 114) device, to and from an information processing station which includes a sender (112) and a receiver (114), characterised in that the said printed circuit plate (24) is located opposite the said main face of the card (C), and includes means (70) for mounting an electric connector (72) belonging to the connecting means, whose electric contact elements (73) cooperate with the said contact pads of the card (C), when the card (C) is positioned to utilise the data,
in that a conductive face (25) of the printed circuit plate (24) includes conductive poles (78) for connecting the batteries contained in the housing, provided for supplying power to the housing (10), and includes a control (74) electric contact element which can be activated from outside the case (10), e.g. for triggering the sending of a signal, and the activation of which is obtained through the elastic deformation of one of the face (16) of the housing (10),
in that the sender (112) and the receiver (114) are arranged on the printed circuit plate (24),
and in that the housing includes a switch (120) for detecting the positioning of the card (C) so that it can be used in the housing (10).

2. A case as claimed in claim 1, characterised in that the switch detecting the presence of the card (C), is a unit (120) movably mounted inside the housing (10) between an idle position and a detection position wherein a conductive branch (122) of the unit cooperates with two tracks (124) formed on the printed circuit plate (24, 25) to open or close a detection circuit, the motions of the movable unit being effected against an elastic load returning the unit to its idle position, through the cooperation of a side edge (44) of the card (C) with a unit (120) driving branch (126).

3. A case as claimed in claim 2, characterised in that the return elastic stress is exerted by at least one branch (128, 134) of the movable unit resting on a corresponding surface (138) of the housing.

4. A portable case as claimed in any one of the preceding claims, characterised in that the said small face of the housing delimits a window (22) through which a tray (26) which delimits the card (C) receiving compartment can slide between an out position in which the card (C) can be positioned in the compartment and an in position in which the card (C) is in running position.

5. A case as claimed in claim 4, characterised in that it includes limit stops (50, 56) arranged between the housing (10) and the tray (26) to limit the travel out of the tray and locking means (46, 48) for locking the tray in.

6. A case as claimed in one of claims 4 or 5, characterised in that the free end of the tray (26) protruding from the housing when in out position includes a transverse face (32) operating like a flap which closes the window (22) when the tray is in.

7. A case as claimed in claim 6, characterised in that the said transverse face of the tray operating like a flap is rotatably mounted around an axle (58, 62) normal to the sliding direction (I) of the tray between a closing position and a retracted position (32') to allow for the positioning of the card (C) into the compartment by introduction thereof along a direction parallel to the plane of the card (C).

8. A case as claimed in any one of claims 4 to 7, characterised in that the tray (26) is made of a frame including at least two side structures (28, 30) connected by a transverse structure (32) and card (C) holding portions (42), formed on the side structures.

9. A case as claimed in any one of claims 4 to 8, characterised in that it includes a secondary tray (84) arranged parallel to the tray (26) receiving the card (C) and at least one battery (82) supplying power to the housing (10).

10. A case as claimed in claim 9, characterised in that both trays (26, 84) are arranged on either side of the printed circuit plate (24), respectively and can slide out of the housing through the same window (22).

11. A case as claimed in claim 10 combined with one of claims 6 or 7, characterised in that the transverse face (32) of the card (C) tray (26) operating like a flap is a trapdoor giving access to the battery tray (84).

12. A case as claimed in any one of the preceding claims, characterised in that the components of the case arranged opposite the main face of the card (C) include openings and/or windows (122) arranged opposite a determined area (120) on the card (C) to identify, from outside the case, a pictogram drawn on this area.
